# EUROPEAN PATENT APPLICATION

(11) **EP 3 795 860 A1**
(43) Date of publication of application: **24.03.2021**
(21) Application number: 19803840.8
(22) Date of filing: 15.05.2019
(51) Int. Cl.: F16H 55/06, B29D 15/00, F16H 55/22

(54) **BEVEL GEAR COMPONENT, BEVEL GEAR, AND BEVEL GEAR COMPONENT MANUFACTURING METHOD**

(30) Priority: 17.05.2018 JP 2018095672
(71) Applicant: ENEOS Corporation, Chiyoda-ku Tokyo 100-8162 (JP); Kabushiki Kaisha Yaskawa Denki, Kitakyushu-shi, Fukuoka 806-0004 (JP)
(72) Inventor: SHINAGAWA, Masaaki, Tokyo 100-8162 (JP); KUBOTA, Yoshiaki, Kitakyushu-shi, Fukuoka 806-0004 (JP); NONAKA, Tuyoshi, Kitakyushu-shi, Fukuoka 806-0004 (JP)
(74) Representative: Grünecker Patent- und Rechtsanwälte PartG mbB
(86) International application number: PCT/JP2019/019373
(87) International publication number: WO 2019/221198

(57) **Abstract**

Provided is a bevel gear component including a plurality of teeth protruding in an axial direction, extending toward an outer peripheral side, and arranged at equal pitches in a circumferential direction, the bevel gear component including a fiber material having a shape corresponding to an arrangement pattern of the plurality of teeth and wound around a center axis.

## Description

### Technical Field

An embodiment of the present invention relates to a bevel gear component, a bevel gear, and a bevel gear component manufacturing method.

### Background Art

As gears, there is known a bevel gear including a plurality of teeth protruding in an axial direction, extending toward an outer peripheral side, and arranged at equal pitches in a circumferential direction. As such a bevel gear, for example, one described in Patent Literature 1 is known.

### Citation List

### Patent Literature

Patent Literature 1: Japanese Unexamined Patent Publication No. 2004-340367

### Summary of Invention

### Technical Problem

The above-described bevel gear is generally formed of a metal material, but when the bevel gear is formed of a metal material, a problem arises in that weight increases. On the other hand, when the bevel gear is formed of a resin material to decrease a weight, a problem arises in that the bevel gear cannot obtain sufficient strength. Thus, the bevel gear which is light in weight and can ensure strength is required.

An object of the present invention is to provide a bevel gear component capable of obtaining a bevel gear having light weight and capable of ensuring strength, a bevel gear having light weight and capable of ensuring strength, and a bevel gear component manufacturing method capable of obtaining such a bevel gear.

### Solution to Problem

A bevel gear component according to an embodiment of the present invention is a bevel gear component including a plurality of teeth protruding in an axial direction, extending toward an outer peripheral side, and arranged at equal pitches in a circumferential direction, the bevel gear component including a fiber material having a shape corresponding to an arrangement pattern of the plurality of teeth and wound around a center axis.

The bevel gear component according to an embodiment of the present invention includes the fiber material having a shape corresponding to the arrangement pattern of the plurality of teeth and wound around the center axis. In this case, since the plurality of teeth are formed by the wound fiber material, the strength can be made higher than that of the teeth of the bevel gear formed by molding the resin material that does not contain the fiber material. Further, since the bevel gear component is formed of the fiber material, the weight can be lighter than that of the bevel gear component formed of metal. As described above, the bevel gear which is light in weight and can ensure strength can be obtained.

In the bevel gear component, an arrangement pattern of a mountain portion and a valley portion corresponding to the arrangement pattern of the teeth may be formed in a back surface on a side opposite to a front surface provided with the teeth in end surfaces in the axial direction. For example, when the resin molded body is molded on the back surface, the resin is fixed to a portion provided with the arrangement pattern of the mountain portion and the valley portion. In this case, the fixing force of the bevel gear component and the resin material can be improved.

In the bevel gear component, the fiber material may be wound in parallel in a radial direction. In this case, since the fiber material is wound in parallel, the fiber material can easily follow the shape of the mold when molding the arrangement pattern of the teeth.

A bevel gear according to an embodiment of the present invention is a bevel gear including: a bevel gear component that includes a plurality of teeth protruding in an axial direction, extending toward an outer peripheral side, and arranged at equal pitches in a circumferential direction; and a base portion that is formed in a back surface on a side opposite to a front surface provided with the teeth in end surfaces of the bevel gear component in the axial direction, in which the bevel gear component includes a fiber material having a shape corresponding to an arrangement pattern of the plurality of teeth and wound around a center axis, and in which the base portion is formed by a resin molded body fixed to the bevel gear component.

According to the bevel gear according to an embodiment of the present invention, the same action and effect as the above-described bevel gear component can be obtained. Further, the base portion is formed by the resin molded body fixed to the bevel gear component. In this way, since a portion that does not require strength compared to the portion of the tooth is formed by the resin molded body, the weight of the entire bevel gear can be made light.

A bevel gear component manufacturing method according to an embodiment of the present invention is a method of manufacturing a bevel gear component including a plurality of teeth protruding in an axial direction, extending toward an outer peripheral side, and arranged at equal pitches in a circumferential direction, including: forming an annular member by winding a fiber material; and forming a shape of the tooth in the annular member.

According to the bevel gear component manufacturing method according to an embodiment of the present invention, the same action and effect as the above-described bevel gear component can be obtained.

In the bevel gear component manufacturing method, in the forming of the shape of the tooth, the shape of the tooth may be formed by pressing a mold against the annular member in the axial direction. In this case, the tooth having a shape corresponding to the shape of the mold can be easily formed on the front surface of the annular member.

### Advantageous Effects of Invention

According to an embodiment of the present invention, it is possible to provide a bevel gear component capable of obtaining a bevel gear having light weight and capable of ensuring strength, a bevel gear having light weight and capable of ensuring strength, and a bevel gear component manufacturing method capable of obtaining such a bevel gear.

### Brief Description of Drawings

FIG. 1 is a perspective view illustrating a bevel gear according to this embodiment.
FIG. 2(a) is a schematic view illustrating a state of a fiber material of a bevel gear component and FIG. 2(b) is an enlarged view illustrating an arrangement state of the fiber material in an area of a part of the bevel gear component.
FIG. 3 is a flowchart illustrating a flow of a bevel gear manufacturing method.
FIG. 4(a) is a diagram illustrating a winding device and FIG. 4(b) is a diagram illustrating an annular member.
FIG. 5(a) is a diagram illustrating the winding device and FIG. 5(b) is an enlarged view illustrating a part of the winding device.
FIG. 6(a) is a diagram illustrating a pressing device and FIG. 6(b) is a diagram illustrating a molded body.
FIGS. 7(a) and 7(b) are diagrams illustrating a molding device.
FIGS. 8(a), 8(b), and 8(c) are diagrams illustrating an operation of the molding device.
FIGS. 9(a), 9(b), and 9(c) are schematic views illustrating a state of a molded body molded by the molding device.
FIG. 10 is a perspective view of the bevel gear component.
FIG. 11 is a diagram illustrating an insert-molding state.
FIG. 12 is a schematic view illustrating a bevel gear component manufacturing method according to a modified example.
FIG. 13 is a schematic view illustrating the bevel gear component manufacturing method according to the modified example.

### Description of Embodiments

Hereinafter, preferred embodiments of the present invention will be described in detail with reference to the drawings. Additionally, in the drawings, the same or corresponding parts will be denoted by the same reference numerals and redundant description will be omitted.

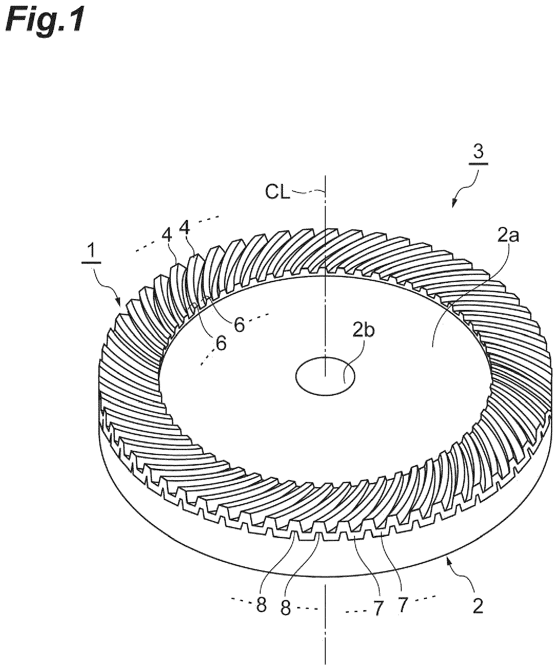

As illustrated in FIG. 1, a bevel gear 3 includes a bevel gear component 1 which is manufactured by a manufacturing method according to this embodiment and a base portion 2 which is formed by injection-molding. A center axis CL is set at the center of the bevel gear 3. In the description below, a direction in which the center axis CL extends is referred to as an "axial direction", a direction around the center axis CL is referred to as a "circumferential direction", and a direction in which a line passing through the center axis CL and orthogonal to the center axis CL extends is referred to as a "radial direction". Further, the terms of "outer periphery" and "inner periphery" based on the center axis CL are used.

The bevel gear component 1 is an annular member which includes a plurality of teeth 4. That is, the bevel gear component 1 constitutes a ring gear used as a tooth member of the bevel gear 3. The tooth 4 of the bevel gear component 1 protrudes in the axial direction, extends toward the outer peripheral side, and is disposed at a plurality of positions at equal pitches in the circumferential direction. A valley portion 6 which meshes with a mating gear is formed between the tooth 4 and the tooth 4. The plurality of teeth 4 are formed on a front surface which is one end surface of the annular member in the axial direction. In this embodiment, the tooth 4 is inclined with respect to the radial direction and extends toward the outer peripheral side in a curved state. Additionally, the shape of the tooth 4 is not particularly limited. The bevel gear component 1 is manufactured by using a prepreg in which a fiber material is impregnated with a resin. A method of manufacturing the bevel gear component 1 will be described in detail later.

The bevel gear component 1 has an arrangement pattern of the mountain portions 7 and the valley portions 8 on a back surface which is the other end surface in the axial direction. The arrangement pattern on the back surface side corresponds to the arrangement pattern of the teeth 4 and the valley portions 6 on the front surface side. The bevel gear component 1 includes the valley portion 8 on the back surface at a position where the tooth 4 is formed on the front surface. The bevel gear component 1 includes the mountain portion 7 on the back surface at a position where the valley portion 6 is formed on the front surface. With such a structure, the uniformity of the thickness of the bevel gear component 1 is improved and the moldability of the bevel gear component 1 is improved.

The base portion 2 is a member that supports the bevel gear component 1 and ensures the strength of the bevel gear 3. The base portion 2 has a disk shape. The bevel gear component 1 is provided along an outer edge portion of one end surface 2a of the base portion 2 in the axial direction. A through-hole 2b to which a rotation shaft (not illustrated) of the bevel gear 3 is attached is formed at the center position of the base portion 2. The base portion 2 is formed by injection-molding. At the time of manufacturing, the injection-molding is performed while the bevel gear component 1 is installed in an injection-molding mold. Accordingly, the bevel gear component 1 is fixed to the base portion 2.

Here, as will be described in detail in the manufacturing method to be described later, the bevel gear component 1 is manufactured in such a manner that a fiber material 10 is wound to form an annular member 20 and the shape of the tooth 4 is formed in the annular member 20. Thus, the bevel gear component 1 includes the fiber material 10 having a shape corresponding to the arrangement pattern of the plurality of teeth 4 and wound around the center axis CL. Additionally, in this embodiment, as will be described in detail in the manufacturing method to be described later, the annular member is formed by winding one continuous fiber material 10 around a core member a plurality of times. That is, in this embodiment, a description will be made below such that the bevel gear component 1 is composed of one continuous fiber material 10. However, as will be described later, when the bevel gear component 1 is molded by laminating a plurality of molded bodies 45 composed of one continuous fiber material 10, the bevel gear component 1 includes the continuous fiber materials 10 as many as the number of laminated layers. Additionally, in this specification, the "fiber material" refers to a wire for one fiber. For example, a member called a tow prepreg in which a plurality of fiber materials are twisted and impregnated with a resin is known, but the fiber material of this embodiment corresponds to one wire in a non-twisted state.

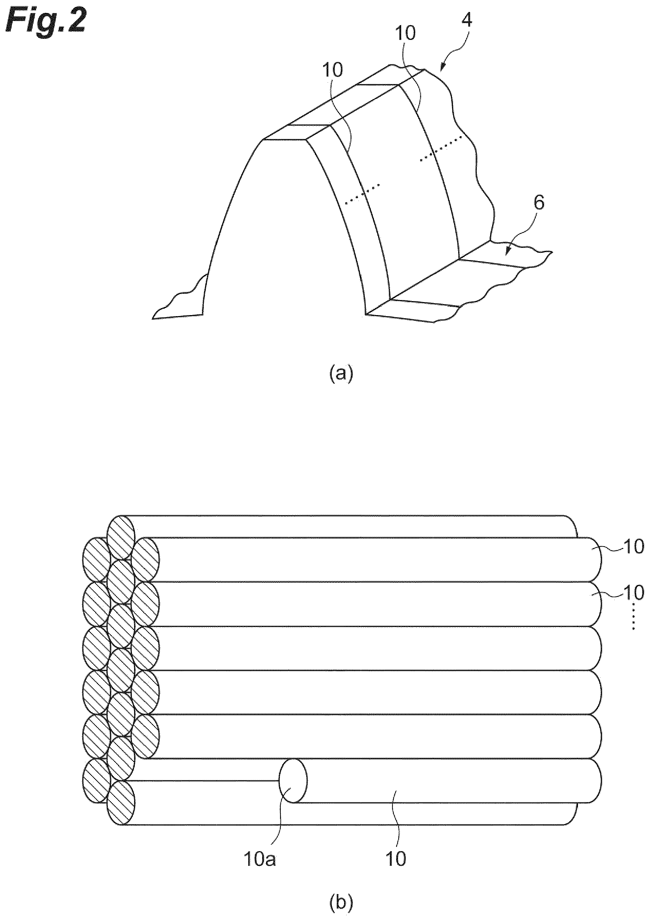

As illustrated in FIG. 2(a), the fiber material 10 is bent to protrude in a mountain shape in accordance with the shape of the tooth 4 at a position corresponding to the tooth 4. Further, the fiber material 10 is bent to be recessed in accordance with the shape of the valley portion 6 at a position corresponding to the valley portion 6. Further, the plurality of fiber materials 10 with such a shape are arranged in the radial direction and the axial direction. Additionally, a state in which the plurality of fiber materials 10 are arranged is a state in which one orbital portion and another orbital portion of one fiber material 10 are arranged. Further, FIG. 2(a) illustrates only the shape of the fiber material 10 located closest to the front surface side (a part of the fiber material 10 in the longitudinal direction), but the fiber material 10 disposed inside the corresponding position has a mountain shape and a valley shape corresponding to the position. Further, the fiber material 10 disposed on the back surface side has a shape corresponding to the mountain portion 7 and the valley portion 8 on the back surface side.

FIG. 2(b) is an enlarged view illustrating an arrangement state of the fiber material 10 in an area of a part of the bevel gear component 1. In FIG. 2(b), the up and down direction of the paper surface corresponds to the radial direction of the bevel gear component 1. As illustrated in FIG. 2(b), the fiber material 10 is wound in parallel in the radial direction. Further, the fiber material 10 is also wound in parallel in the axial direction. The parallel state is a state in which the fiber material 10 associated with one orbital portion and the fiber material 10 associated with another orbital portion extend in the same direction and are arranged in substantially parallel. Additionally, the fiber material 10 of the orbital portions may not be perfectly parallel to each other and may be deviated from the parallel state due to distortion during molding or the like. For example, when the bevel gear component 1 is manufactured using a tow prepreg, the plurality of fiber materials 10 are twisted together and each fiber has a twisted relationship with each other. Such a state does not correspond to a state in which the fiber material 10 of this embodiment is parallel to each other (corresponding to a modified example to be described later). Additionally, also in the bevel gear component 1 according to this embodiment, the fiber material 10 may not be parallel to each other due to the local disturbance of the fiber material 10 or the like in any part of the radial direction, the circumferential direction, and the axial direction.

Additionally, the fiber material 10 is a continuous fiber in which a fiber is continuous in the longitudinal direction. As the fiber material 10, fibers having high strength and high elastic modulus such as carbon fibers, glass fibers, aramid fibers, silicon carbide fibers, and alumina fibers can be used alone or in combination. From the viewpoint of the strengthening efficiency of the strength of the bevel gear component 1 and imparting functions such as dimensional stability, corrosion resistance, slidability, antistatic property, and weight reduction thereto, carbon fibers are most preferable among these fibers.

Further, the bevel gear component 1 contains a resin for maintaining the shape of the fiber material 10 formed in a desired shape. The resin is contained in the entire bevel gear component 1 and hardens the fiber material 10 while the arrangement pattern of the teeth 4 is formed. As such a resin, for example, a thermoplastic resin is adopted. Although the thermoplastic resin is selected from the required functions of the bevel gear component 1, nylon, polyester, polypropylene, polycarbonate, ABS, polyphenylene oxide, polyphenylene sulfide, their polymer alloys, and the like are used in general and particularly when strength or heat resistance is required, polyetherketone, polyetheretherketone, polyetherketoneketone, polyetherimide, polyethersulfone, and the like are used.

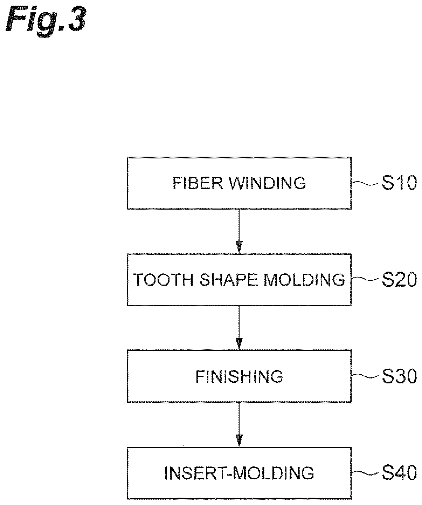

Next, a method of manufacturing the bevel gear 3 according to this embodiment will be described with reference to FIGS. 3 to 11. As illustrated in FIG. 3, the method of manufacturing the bevel gear 3 includes Step S10 of winding a fiber, Step S20 of molding a tooth shape, Step S30 of performing finishing, and Step S40 of performing insert-molding.

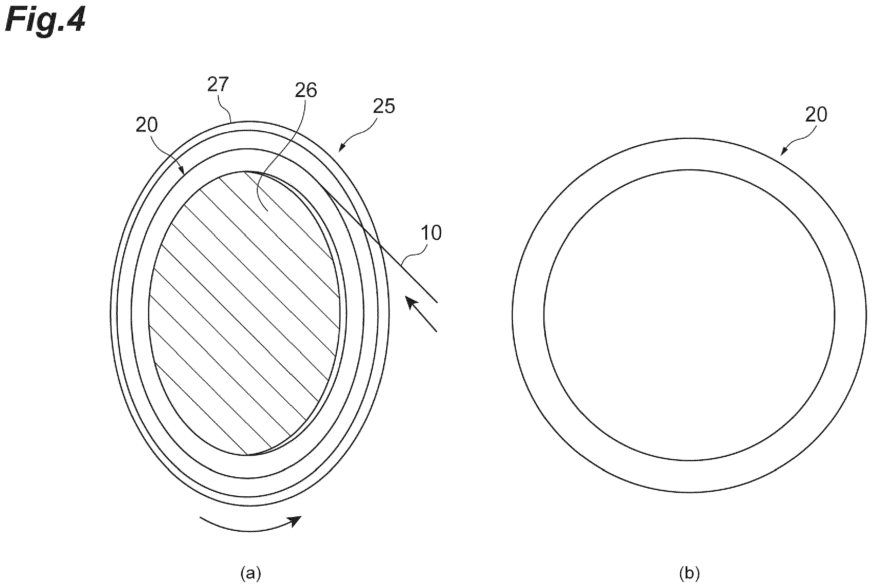

Step S10 is a step of forming the annular member 20 by winding the fiber material 10. In Step S10, the fiber material 10 is wound using, for example, a winding device 25 illustrated in FIG. 4(a) to form the annular member 20 illustrated in FIG. 4(b). Additionally, a regulation plate 28 is not illustrated in FIG. 4(b). The fiber materials 10 are wound on the annular member 20 while being parallel to each other in the radial direction and the axial direction. The circumferential length of the outer peripheral edge portion of the annular member 20 corresponds to the outermost peripheral surface length of the bevel gear component 1.

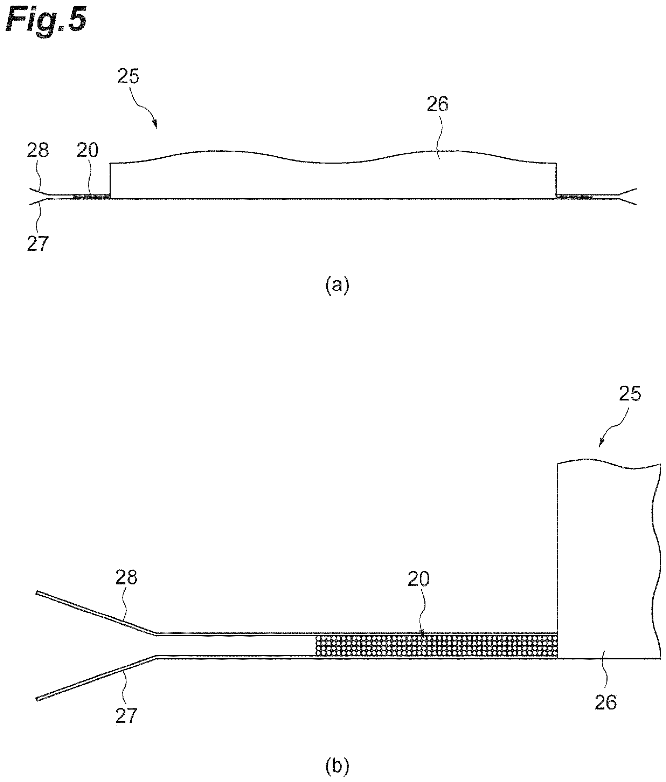

A structure of the winding device 25 according to an example is illustrated in FIG. 5. As illustrated in FIG. 5(a), the winding device 25 includes a columnar core portion 26 and regulation plates 27 and 28 which spread from the core portion 26 to the outer peripheral side. The core portion 26 has an outer circumferential length corresponding to the circumferential length on the inner peripheral side of the annular member 20. The regulation plates 27 and 28 are annular plate members that are separated from each other with a gap interposed therebetween in the axial direction of the core portion 26. The size of the gap between the regulation plates 27 and 28 is set to the size of the thickness of the annular member 20. The edge portions of the regulation plates 27 and 28 on the outer peripheral side are inclined and widened to guide the fiber materials 10. Accordingly, as illustrated in FIG. 4(a), the winding device 25 rotates the core portion 26 by fixing a start end portion of the fiber material 10 to the vicinity of the outer peripheral surface of the core portion 26. Additionally, a feeding device (not illustrated) sends the fiber material 10 toward the winding device 25. Accordingly, the winding device 25 winds the fiber material 10 between the regulation plates 27 and 28 over a plurality of turns. Additionally, as illustrated in FIG. 5(b), the winding device 25 forms a layer in which the plurality of fiber materials 10 are arranged in the axial direction and forms a plurality of the layers in the radial direction to form the annular member 20.

Additionally, a thermoplastic resin is applied to the annular member 20 before performing the subsequent Step S20. Additionally, a timing at which the thermoplastic resin is applied is not particularly limited and the thermoplastic resin may be applied while winding the fiber material 10, the thermoplastic resin may be applied in advance to the fiber material 10 which will be wound, or the thermoplastic resin may be applied to the annular member 20 which is completely wound.

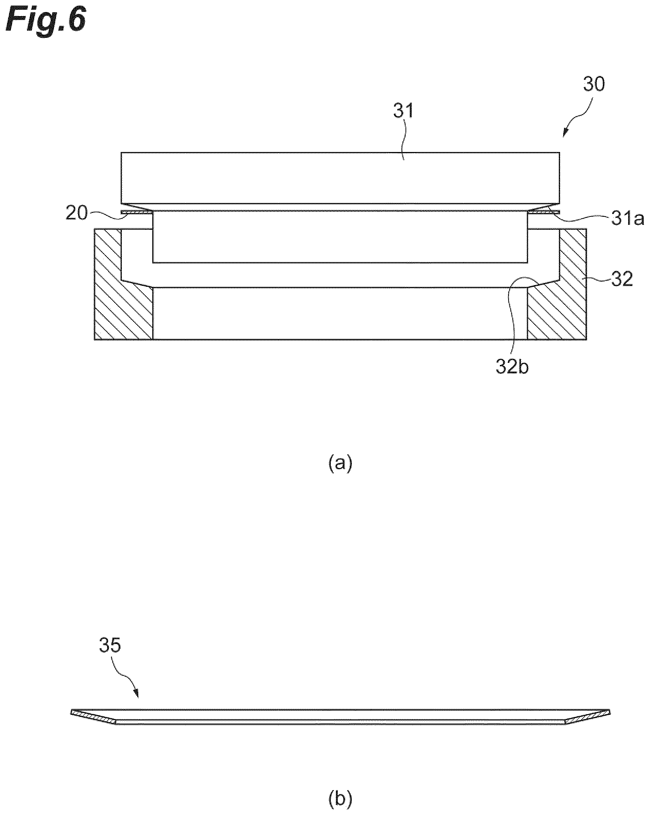

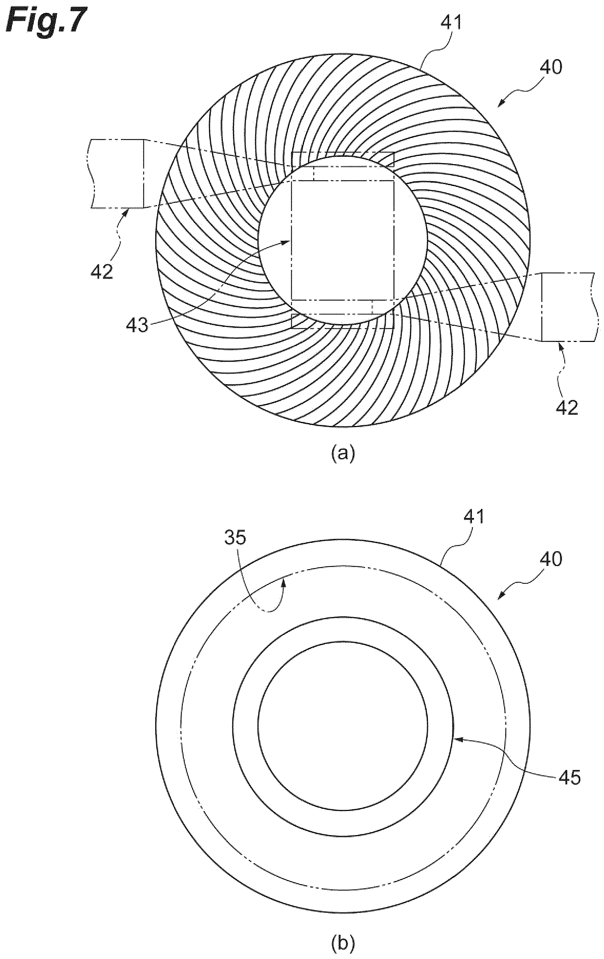

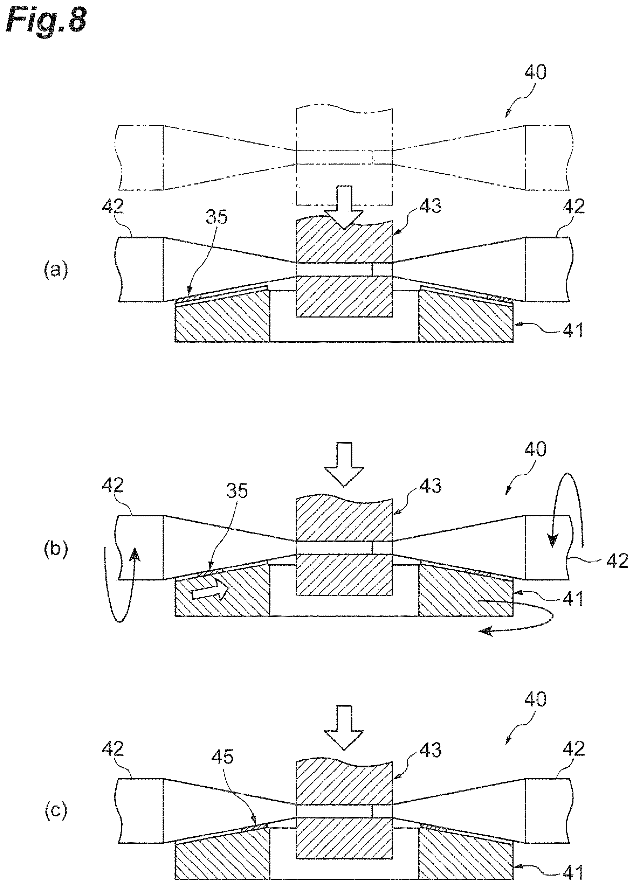

Step S20 is a step of forming the shape of the tooth 4 in the annular member 20. In Step S20, a pressing device 30 illustrated in FIG. 6 and a molding device 40 illustrated in FIGS. 7 and 8 are used.

The pressing device 30 illustrated in FIG. 7 is a device that molds a conical molded body 35 so that the annular member 20 has a shape easily molded by the molding device 40. The pressing device 30 includes a lower mold 32 having a molding surface 32b and an upper mold 31 having a molding surface 31a. The molding surface 32b and the molding surface 31a are inclined downward as it goes from the outer peripheral side to the inner peripheral side. The pressing device 30 molds the conical molded body 35 illustrated in FIG. 6(b) by disposing the annular member 20 between the molding surface 32b and the molding surface 31a and pressing the annular member in a heated state.

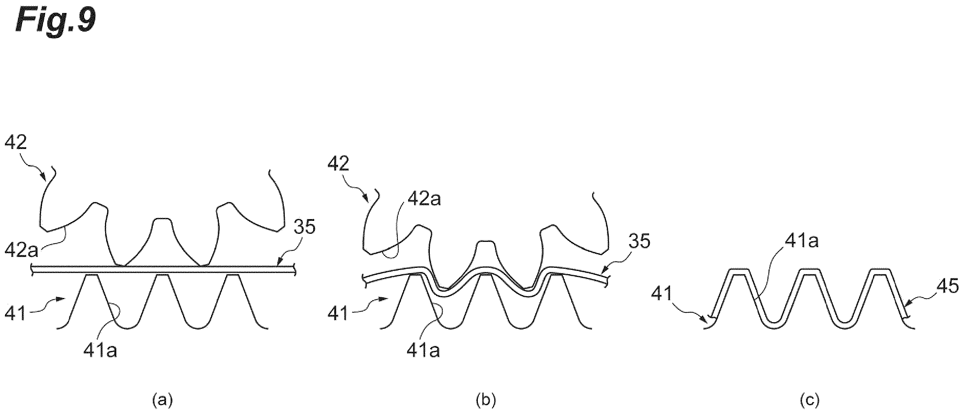

The molding device 40 includes a lower mold (mold) 41, an upper mold (mold) 42, and a support portion 43 supporting the upper mold 42. The lower mold 41 is a bevel gear mold which includes a plurality of teeth on an upper surface. The lower mold 41 is a mold for molding a shape on the back surface side of the bevel gear component 1. The lower mold 41 includes a plurality of teeth 41a (see FIG. 9). The arrangement pattern of the teeth 41a corresponds to the arrangement pattern of the mountain portions 7 and the valley portions 8 of the bevel gear component 1. The diameter of the outer peripheral portion of the lower mold 41 is equal to or larger than the diameter of the outer peripheral portion of the molded body 35. The diameter of the inner peripheral portion of the lower mold 41 is equal to or smaller than the diameter of the inner peripheral portion of the molded body 45 after molding.

The upper mold 42 is a pinion mold which includes a rotation shaft extending in a direction perpendicular to the center axis of the lower mold 41 and rotates about the rotation shaft. The upper mold 42 is a mold for molding a shape on the front surface side of the bevel gear component 1. A pair of the upper molds 42 is provided at an upper position facing the molding surface of the lower mold 41. One upper mold 42 and the other upper mold 42 have a positional relationship rotated by 180° with the center axis as a reference line. The upper mold 42 has a conical molding surface that tapers toward the center of the lower mold 41. The molding surface is provided with a plurality of teeth 42a. The plurality of teeth 42a are configured to mesh with the plurality of teeth 41a of the lower mold 41 (see FIG. 9). The support portion 43 is disposed in the vicinity of the center position of the lower mold 41 and rotatably supports the front end portion of each upper mold 42.

In Step S20, the shape of the tooth 4 is formed by pressing the lower mold 41 and the upper mold 42 in the axial direction with respect to the molded body 35 of the annular member 20 while heating the molded body 35 of the annular member 20. Specifically, as illustrated in FIG. 8(a), the upper mold 42 and the support portion 43 are moved downward with respect to the lower mold 41 on which the molded body 35 is disposed. Accordingly, as illustrated in FIG. 9(a), the molded body 35 disposed on the teeth 41a of the lower mold 41 contacts the teeth 42a of the upper mold 42.

Next, as illustrated in FIGS. 8(b) and 8(c), the upper mold 42 and the support portion 43 are moved downward while rotating the lower mold 41 and the upper mold 42. Accordingly, as illustrated in FIG. 9(b), the molded body 35 is pressed by the tooth 42a of the upper mold 42 and is deformed to enter the valley portion between the teeth 41a of the lower mold 41. The upper mold 42 is gradually moved downward while rotating the upper mold 42 and the lower mold 41 and a pressing operation is performed a plurality of times while gradually increasing the pressing amount of the upper mold 42 with respect to each position of the molded body 35 in the circumferential direction. Finally, the upper mold 42 presses the molded body 35 against the lower mold 41 so that the tooth 42a of the upper mold 42 completely meshes with the tooth 41a of the lower mold 41 with the molded body 35 interposed therebetween. Then, the upper mold 42 and the support portion 43 are moved upward. Accordingly, as illustrated in FIG. 9(c), the molding of the molding device 40 is completed so that the molded body 45 is completed. Additionally, the diameter of the molded body 35 decreases by the amount that the size of the mountain portion and the valley portion increases as the molding of the molded body 35 progresses. Thus, as illustrated in FIG. 7(b), the diameter of the molded body 45 after molding becomes smaller than the diameter of the molded body 35 before molding.

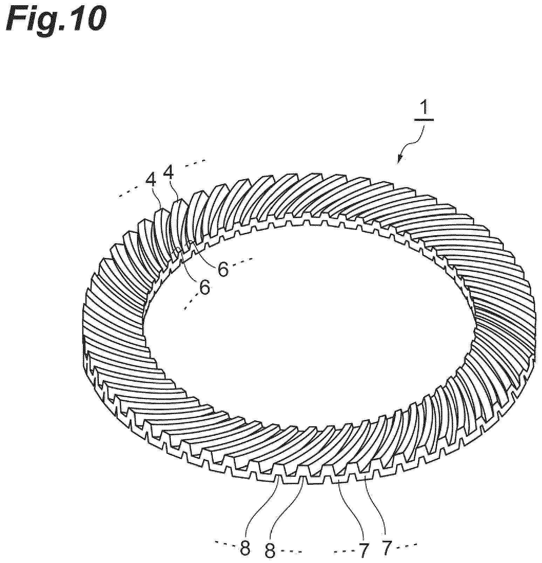

Step S30 is a step of finishing the molding of the bevel gear component 1 by using the molded body 45 on which the tooth arrangement pattern is formed. In Step S30, the plurality of molded bodies 45 are overlapped in the axial direction and are heated and pressed by the mold in the up and down direction to complete the bevel gear 3. Additionally, the number of the overlapped molded bodies 45 may be two or three or more. Further, the bevel gear component 1 may be formed by heating and pressing one molded body 45 without overlapping the molded bodies 45. As described above, the bevel gear component 1 illustrated in FIG. 10 is completed.

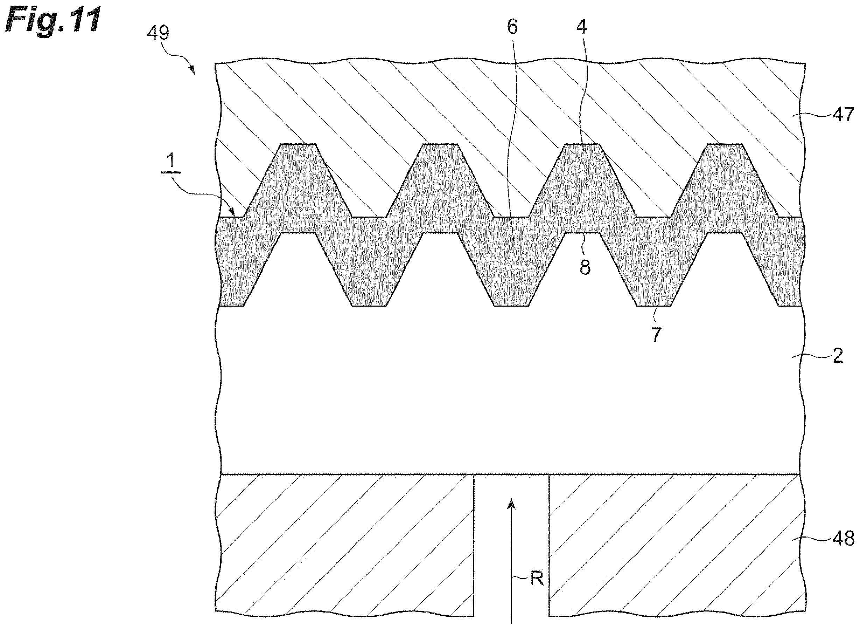

Step S40 is a step of molding the base portion 2 in the bevel gear component 1. In Step S40, insert-molding is performed by using the molding device 49. As illustrated in FIG. 11, the other mold 48 is closed while the bevel gear component 1 is disposed in one mold 47. The resin material R is injected into the internal space inside the molds 47 and 48. Accordingly, the base portion 2 is formed by the resin molded body fixed to the bevel gear component 1. At this time, the resin material of the base portion 2 is fixed to the bevel gear component 1 so as to bite into the valley portion 8 on the back surface side of the bevel gear component 1. As described above, the bevel gear 3 illustrated in FIG. 1 is completed.

Next, the action and effect of the bevel gear component 1, the bevel gear 3, and the method of manufacturing the bevel gear component 1 according to this embodiment will be described.

The bevel gear component 1 according to this embodiment includes the fiber material 10 having a shape corresponding to the arrangement pattern of the plurality of teeth 4 and wound around the center axis. In this case, since the plurality of teeth 4 are formed by the wound fiber material 10, the strength can be made higher than that of the teeth 4 of the bevel gear formed by molding a resin material that does not contain the fiber material 10. Further, since the bevel gear component 1 is formed of the fiber material 10, the weight can be lighter than that of the bevel gear component formed of metal. As described above, the bevel gear 3 which is light in weight and can ensure strength can be obtained.

For example, when the bevel gear component 1 is formed by one continuous fiber material 10, a cut portion 10a of the fiber material 10 illustrated in FIG. 2(b) is formed at the winding starting end portion and the winding finishing end portion of the fiber material 10. A portion of such a cut portion 10a is a portion that causes a decrease in strength of the tooth 4. Thus, for example, when there is a portion in which the cut portions 10a are arranged in parallel over the entire radial direction of the tooth 4, the strength of the tooth 4 at that position decreases. However, in the bevel gear component 1 according to this embodiment, as illustrated in FIG. 2(b), the cut portion 10a is formed at the winding starting end portion and the winding finishing end portion of the fiber material 10, but the fiber material 10 extends continuously without cutting in other orbital portions arranged in parallel in the radial direction. In this way, since the bevel gear component 1 does not have a portion in which the cut portion 10a of the fiber material 10 is continuous in the radial direction, the strength can be increased.

In the bevel gear component 1, the arrangement pattern of the mountain portion 7 and the valley portion 8 corresponding to the arrangement pattern of the teeth 4 is formed in the back surface on the side opposite to the front surface provided with the tooth 4 in the end surfaces of the axial direction. In Step S40, the resin used when molding the resin molded body in the back surface is fixed to a portion provided with the arrangement pattern of the mountain portion 7 and the valley portion 8. In this case, the fixing force of the bevel gear component 1 and the resin material can be improved.

In the bevel gear component 1, the fiber materials 10 are wound in parallel in the radial direction. In this case, since the fiber materials 10 are wound in parallel, the fiber material 10 can easily follow the shape of the mold when molding the arrangement pattern of the teeth 4.

The bevel gear 3 according to this embodiment is the bevel gear 3 including the bevel gear component 1 which includes the plurality of teeth 4 protruding in the axial direction, extending toward the outer peripheral side, and arranged at equal pitches in the circumferential direction and the base portion 2 which is formed in the back surface on the side opposite to the front surface provided with the tooth 4 in the end surfaces of the bevel gear component 1 in the axial direction, the bevel gear component 1 includes the fiber material 10 having a shape corresponding to the arrangement pattern of the plurality of teeth 4 and wound around the center axis, and the base portion 2 is formed by the resin molded body fixed to the bevel gear component 1.

According to the bevel gear 3 according to this embodiment, the same action and effect as the bevel gear component 1 can be obtained. Further, the base portion 2 is formed by the resin molded body fixed to the bevel gear component 1. In this way, the weight of the entire bevel gear 3 can be reduced by forming a portion that does not require strength compared to the portion of the tooth 4 as the resin molded body.

The method of manufacturing the bevel gear component 1 according to this embodiment is the method of manufacturing the bevel gear component 1 including the plurality of teeth 4 protruding in the axial direction, extending toward the outer peripheral side, and arranged at equal pitches in the circumferential direction and includes a step of forming the annular member 20 by winding the fiber material 10 and a step of forming the shape of the tooth 4 with respect to the annular member 20.

According to the method of manufacturing the bevel gear component 1 according to this embodiment, the same action and effect as the bevel gear component 1 can be obtained.

In the method of manufacturing the bevel gear component 1, in the step of forming the shape of the tooth 4, the shape of the tooth 4 is formed by pressing the upper mold 42 with respect to the annular member 20 in the axial direction. In this case, the tooth having a shape corresponding to the shape of the upper mold 42 can be easily formed on the front surface of the annular member 20.

The present invention is not limited to the above-described embodiment.

For example, in the above-described embodiment, the annular member 20 was formed by winding one continuous fiber material 10 when forming the annular member 20. Instead, when the fiber material 10 runs out while winding the fiber material 10 in order to form the annular member 20, the winding may be resumed by setting a new fiber material 10. Further, the annular member 20 may be formed by winding the plurality of fiber materials 10 in a bundle. A state in which the plurality of fiber materials 10 are bundled may be, for example, a tow prepreg.

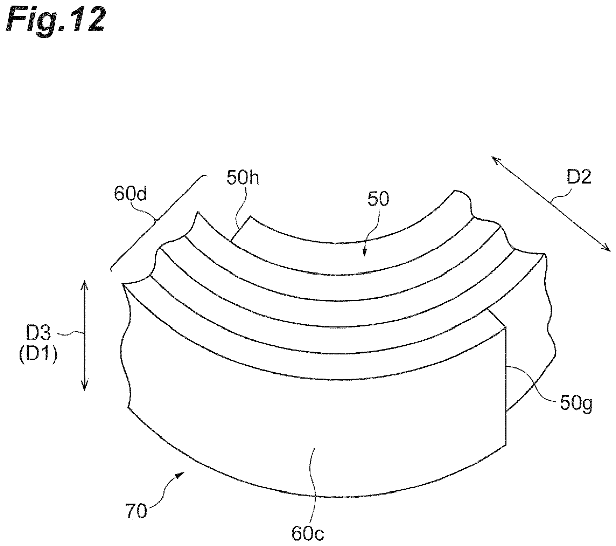

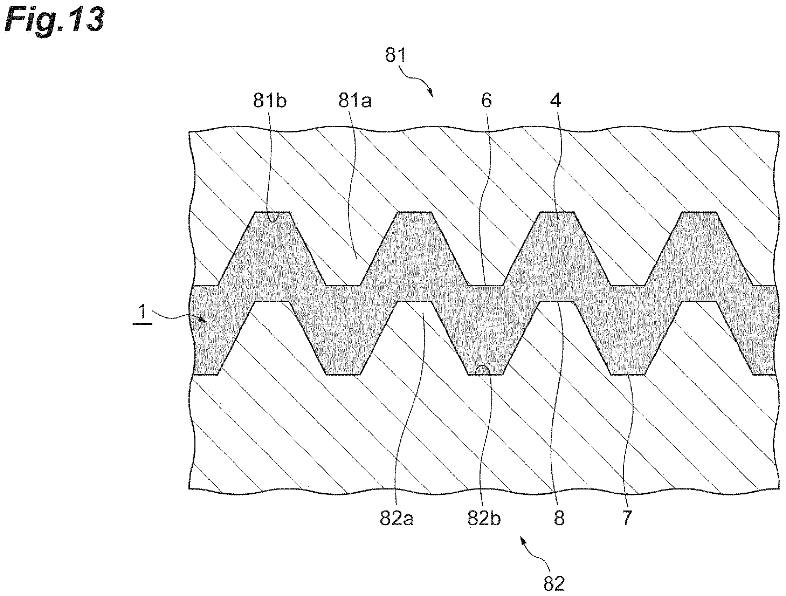

Further, an annular member 70 may be formed by combining the plurality of fiber materials 10 to prepare a band-shaped member 50 illustrated in FIG. 12 and winding the band-shaped member 50. The dimension of the band-shaped member 50 in the width direction D1 is the same as the dimension of the annular member 70 in the height direction D3. The dimension of the annular member 70 in the radial direction D2 (that is, corresponding to the radial direction of the bevel gear component) becomes the thickness dimension of several band-shaped members 50. When molding such an annular member 70, as illustrated in FIG. 13, a mold 81 having an arrangement pattern of a mountain portion 81a and a valley portion 81b corresponding to the arrangement pattern of the teeth 4 and a mold 82 having an arrangement pattern of a mountain portion 82a and a valley portion 82b corresponding to the arrangement pattern of the mountain portion 7 and the valley portion 8 are prepared. Then, a molding surface of the mold 81 is pressed against a front surface of the annular member 70 and a molding surface of the mold 82 is pressed against a back surface of the annular member 70 to mold the bevel gear component 1. Additionally, in this case, measures that give a corrugated shape to the band-shaped member 50 or wind the band-shaped member 50 in a loosened state may be performed so that the fiber material 10 inside the band-shaped member 50 is satisfactorily deformed.

As illustrated in FIG. 12, in the annular member 70, the band-shaped member 50 is disposed while the width direction D1 of the band-shaped member 50 follows the axial direction and the plurality of band-shaped members 50 are disposed in the radial direction of the annular member 70. Since end portions 50g and 50h of the band-shaped member 50 in the winding direction correspond to the cut portion of the fiber material 10, the end portions affect the strength of the tooth 4. In contrast, the plurality of band-shaped members 50 are disposed in the radial direction D2 of the annular member 70. The tooth 4 of the bevel gear component 1 extends in the radial direction D2. For example, when the end portions 50g and 50h of the band-shaped member 50 extend over the entire area 60d in the radial direction D2 of the annular member 70, the cut portion of the fiber material 10 is formed over the entire area in the extension direction of the tooth 4 of the bevel gear component 1. In this case, the strength of the tooth 4 may decrease. In the above-described embodiment, even when the end portions 50g and 50h of the band-shaped member 50, that is, the cut portions of the fiber materials 10 are formed in some layers (the outermost layer and the innermost layer), the cut portion is continuous in the height direction D3 and is not continuous in the extension direction of the tooth 4 of the bevel gear component 1. Thus, the strength of the tooth 4 of the bevel gear component 1 can be improved. Further, it is possible to prevent the cut portions of the fiber materials 10 from concentrating at a specific position by shifting the positions of the end portion 50g and the end portion 50h in the circumferential direction.

### Reference Signs List

1: bevel gear component, 2: base portion, 3: bevel gear, 4: tooth, 10: fiber material, 20, 70: annular member, 42: upper mold (mold), 81: mold.

## Claims

1. A bevel gear component including a plurality of teeth protruding in an axial direction, extending toward an outer peripheral side, and arranged at equal pitches in a circumferential direction, the bevel gear component comprising:
a fiber material having a shape corresponding to an arrangement pattern of the plurality of teeth and wound around a center axis.

2. The bevel gear component according to claim 1,
wherein an arrangement pattern of a mountain portion and a valley portion corresponding to the arrangement pattern of the teeth is formed in a back surface on a side opposite to a front surface provided with the teeth in end surfaces in the axial direction.

3. The bevel gear component according to claim 1 or 2,
wherein the fiber material is wound in parallel in a radial direction.

4. A bevel gear comprising:
a bevel gear component that includes a plurality of teeth protruding in an axial direction, extending toward an outer peripheral side, and arranged at equal pitches in a circumferential direction; and
a base portion that is formed in a back surface on a side opposite to a front surface provided with the teeth in end surfaces of the bevel gear component in the axial direction,
wherein the bevel gear component includes a fiber material having a shape corresponding to an arrangement pattern of the plurality of teeth and wound around a center axis, and
wherein the base portion is formed by a resin molded body fixed to the bevel gear component.

5. A method of manufacturing a bevel gear component including a plurality of teeth protruding in an axial direction, extending toward an outer peripheral side, and arranged at equal pitches in a circumferential direction, comprising:
forming an annular member by winding a fiber material; and
forming a shape of the tooth in the annular member.

6. The bevel gear component manufacturing method according to claim 5,
wherein in the forming of the shape of the tooth, the shape of the tooth is formed by pressing a mold against the annular member in the axial direction.
